# EUROPÄISCHE PATENTSCHRIFT

(11) **EP 2 654 997 B1**
(45) Veröffentlichungstag und Bekanntmachung des Hinweises auf die Patenterteilung: **20.02.2019**
(21) Anmeldenummer: 11782628.9
(22) Anmeldetag: 17.11.2011
(51) Int. Cl.: B23B 51/00, B24D 3/34, B24D 7/14, B28D 1/14, B24D 99/00

(54) **BOHRER MIT SCHLEIFPARTIKELGRADIENT**
DRILL WITH GRINDING PARTICLES VARIATION
FORET AVEC VARIATION DE PARTICULES DE BROYAGE

(30) Priorität: 22.12.2010 DE 102010063836
(43) Veröffentlichungstag der Anmeldung: 30.10.2013
(73) Patentinhaber: Robert Bosch GmbH, 70442 Stuttgart (DE)
(72) Erfinder: KIEFER, Matthias, CH-5037 Muhen (CH); MULONE, Roberto, CH-3924 St. Niklaus VS (CH)
(86) Internationale Anmeldenummer: PCT/EP2011/070307
(87) Internationale Veröffentlichungsnummer: WO 2012/084357

(56) Entgegenhaltungen:
- EP-A2- 1 405 692
- WO-A1-2008/104341
- DE-A1- 4 442 662
- DE-A1- 10 114 882
- JP-A- 11 156 618
- US-A- 4 713 286
- US-A- 5 123 217

## Beschreibung

Die vorliegende Erfindung betrifft ein Schneidelement für einen Bohrer, einen Bohrer, ein Bohrsystem sowie ein Betriebsverfahren für einen Bohrer.

### Stand der Technik

Stahlbeton und ähnliche Materialien können derzeit durch Bohrhammer, Schlagbohrer und Diamantkernbohrer bearbeitet werden.

Bohrhämmer oder Schlagbohrer können dafür mit einem Bohrer mit einer Carbidspitze ausgestattet werden. Der Benutzer wird beim Einsatz eines Bohrhammers oder Schlagbohrers jedoch starken Vibrationen ausgesetzt und muss einem Teil der Stoßkraft standhalten.

Diamantkernbohrer können ohne Stoßkraft eingesetzt werden. Während des Betriebes kann jedoch die Temperatur des Bohrers schnell ansteigen, was zu einem Verlust der mechanischen Eigenschaften der Schneidelemente des Bohrers oder sogar zum Verlust von Scheidelementen und damit zu einem Ausfall des Werkzeugs führen kann. Um die Effektivität von Diamantkernbohrern verbessern werden diese meist mit einer Wasserkühlung eingesetzt. In manchen Situationen, beispielsweise bei Restaurierungsarbeiten, ist es jedoch wünschenswert eine Wasserkühlung zu vermeiden.

US 5,123,217 beschreibt einen Bohrer gemäß dem Oberbegriff des Anspruchs 1, zur Verwendung bei einem Bohren von harten und spröden Materialien, der einen Schaft und einen Bohrabschnitt aufweist, der an einem Ende des Schafts befestigt ist. Der Bohrabschnitt weist eine sich verjüngende Primärschneidkante, eine erste Sekundärschneidoberfläche und eine zweite Sekundärschneidoberfläche auf. Die Primärschneidkante hat eine erste Schleifkornschicht und die erste und zweite Sekundärschneidoberfläche haben beide eine zweite Schleifkornschicht. Jedes Schleifkorn in der ersten Schleifkornschicht hat einen Durchmesser, der größer als derjenige jedes Schleifkorns in der zweiten Schleifkornschicht ist.

### Offenbarung der Erfindung

Gegenstand der vorliegenden Erfindung ist ein Schneidelement für einen Bohrer, wobei das Schneidelement dazu ausgelegt ist, sich beim Bohren um eine Rotationsachse zu drehen, wobei das Schneidelement mindestens eine erste Schleifpartikelart umfasst, wobei der Gehalt an Schleifpartikeln der ersten Art von der Rotationsachse des Schneidelements zur Peripherie des Schneidelementes kontinuierlich oder kontinuierlich und schrittweise steigt. Mit anderen Worten, der Gehalt an Schleifpartikeln der ersten Art sinkt von der Peripherie des Schneidelements zur Rotationsachse des Schneidelements kontinuierlich.

In einem dem besseren Verständnis dienenden Beispiel ist ein Schneidelement für einen Bohrer vorgesehen, wobei das Schneidelement dazu ausgelegt ist, sich beim Bohren um eine Rotationsachse zu drehen, wobei das Schneidelement mindestens eine erste Schleifpartikelart umfasst, wobei der Gehalt an Schleifpartikeln der ersten Art von der Rotationsachse des Schneidelements zur Peripherie des Schneidelementes schrittweise steigt. Mit anderen Worten, der Gehalt an Schleifpartikeln der ersten Art sinkt von der Peripherie des Schneidelements zur Rotationsachse des Schneidelements schrittweise.

Unter einem Schneidelement kann im Sinn der vorliegenden Erfindung insbesondere ein Element eines Bohrers verstanden werden, welches zum Spanen des Werkstücks vorgesehen ist. Insbesondere kann das Schneidelement eine Bohrspitze oder eine Bohrkrone, insbesondere eine ringförmige Bohrkrone, oder ein Bestandteil, insbesondere ein Segment, einer Bohrkrone oder eine Kombination davon sein.

Die Erfindung liegt der Gedanke zu Grunde, dass die Bahngeschwindigkeit im Bereich der Peripherie höher ist als im Bereich der Rotationsachse des Schneidelements, weshalb Schleifpartikel, welche herkömmlicherweise bei hohen Drehzahlen eine hohe Schneideffizienz aufweisen, wie Diamantpartikel, - aufgrund der höheren Bahngeschwindigkeit im Bereich der Peripherie - auch bei niedrigeren Drehzahlen eine hohe Schneideffizienz aufweisen können, wenn diese verstärkt im Bereich der Peripherie des Schneidelements eingesetzt werden. Umgekehrt können Schleifpartikel, welche herkömmlicherweise bei niedrigen Drehzahlen eine hohe Schneideffizienz aufweisen, wie Carbide, beispielsweise Wolframcarbid, - aufgrund der niedrigeren Bahngeschwindigkeit im Bereich der Rotationsachse - auch bei höheren Drehzahlen eine hohe Schneideffizienz aufweisen, wenn diese verstärkt im Bereich der Rotationsachse des Schneidelements eingesetzt werden.

So kann vorteilhafterweise die Effizienz und Lebensdauer des Schneidelements, insbesondere beim Bohren von Stahlbeton und ähnlichen Materialien, sowie der Benutzerkomfort, insbesondere durch Verringerung von Vibrationen und Geräuschen, erhöht werden.

Insbesondere kann der Massenanteil und/oder der Stoffmengenanteil und/oder der Volumenanteil und/oder die Partikelkonzentration an Schleifpartikeln der ersten Art kontinuierlich oder kontinuierlich und schrittweise von der Rotationsachse des Schneidelements zur Peripherie des Schneidelementes steigen beziehungsweise von der Peripherie des Schneidelements zur Rotationsachse des Schneidelements sinken.

In einem dem besseren Verständnis dienenden Beispiel kann der Massenanteil und/oder der Stoffmengenanteil und/oder der Volumenanteil und/oder die Partikelkonzentration an Schleifpartikeln der ersten Art schrittweise von der Rotationsachse des Schneidelements zur Peripherie des Schneidelementes steigen beziehungsweise von der Peripherie des Schneidelements zur Rotationsachse des Schneidelements sinken.

Im Rahmen einer Ausführungsform umfasst das Schneidelement weiterhin mindestens eine zweite, von der ersten unterschiedliche Schleifpartikelart. So kann die Effizienz und der Benutzerkomfort weiter verbessert werden.

Im Rahmen einer weiteren Ausführungsform sinkt der Gehalt an Schleifpartikeln der zweiten Art von der Rotationsachse des Schneidelements zur Peripherie des Schneidelementes kontinuierlich oder schrittweise. Mit anderen Worten, der Gehalt an Schleifpartikeln der zweiten Art steigt von der Peripherie des Schneidelements zur Rotationsachse des Schneidelements kontinuierlich oder schrittweise. Insbesondere kann der Massenanteil und/oder der Stoffmengenanteil und/oder der Volumenanteil und/oder die Partikelkonzentration an Schleifpartikeln der zweiten Art kontinuierlich und/oder schrittweise von der Rotationsachse des Schneidelements zur Peripherie des Schneidelementes sinken beziehungsweise von der Peripherie des Schneidelements zur Rotationsachse des Schneidelements steigen.

Im Rahmen einer weiteren Ausführungsform steigt der Gehalt an Schleifpartikeln der ersten Art von der Rotationsachse des Schneidelements zur Peripherie des Schneidelementes von ≥ 0 Gew.-% auf ≤ 100 Gew.-%, bezogen auf das Gesamtgewicht an Schleifpartikeln, kontinuierlich.

In einem dem besseren Verständnis dienenden Beispiel steigt der Gehalt an Schleifpartikeln der ersten Art von der Rotationsachse des Schneidelements zur Peripherie des Schneidelementes von ≤ 0 Gew.-% auf ≤ 100 Gew.-%, bezogen auf das Gesamtgewicht an Schleifpartikeln, schrittweise.

Im Rahmen einer weiteren Ausführungsform sinkt der Gehalt an Schleifpartikeln der zweiten Art von der Rotationsachse des Schneidelements zur Peripherie des Schneidelementes von ≤ 100 Gew.-% auf ≥ 0 Gew.-%, bezogen auf das Gesamtgewicht an Schleifpartikeln, kontinuierlich oder schrittweise.

Im Rahmen einer weiteren Ausführungsform weist die erste Schleifpartikelart bei hohen Drehzahlen, beispielsweise in einem Bereich von ≥ 5000 rpm bis ≤ 15000 rpm, eine höhere Schneideffizienz auf als die zweite Schleifpartikelart.

Im Rahmen einer weiteren Ausführungsform weist die zweite Schleifpartikelart bei niedrigen Drehzahlen, beispielsweise in einem Bereich von ≥ 500 rpm bis ≤ 5000 rpm, insbesondere von ≥ 500 rpm bis ≤ 3000 rpm, eine höhere Schneideffizienz auf als die erste Schleifpartikelart.

Die Schleifpartikel der ersten und zweiten Art können beispielsweise ausgebildet sein aus einem oder mehreren Materialien, welche ausgewählt sind aus der Gruppe, bestehend aus Diamant, kubischem Bornitrid (c-BN), Hartmetall, Wolframcarbid, Titancarbid, Titannitrid, Titanborid (TiB₂), Hafniumcarbid, Tantalcarbid, Siliciumcarbid, Aluminiumoxid und Mischungen davon, wie Titanwolframcarbide (TiₓW_{y}C_{z}) oder Titancarbidnitride (TiCₐN_{b}), insbesondere Diamant (synthetischem oder natürlichem).

Beispielsweise können die Schleifpartikel der ersten Art im Wesentlichen Diamant und die Schleifpartikel der zweiten Art im Wesentlichen Hartmetall umfassen. Oder die Schleifpartikel der ersten Art können im Wesentlichen Wolframcarbid und die Schleifpartikel der zweiten Art im Wesentlichen Aluminiumoxid umfassen. Oder die Schleifpartikel der ersten Art können im Wesentlichen Titandiborid und die Schleifpartikel der zweiten Art im Wesentlichen Siliciumcarbid umfassen.

Im Rahmen einer weiteren Ausführungsform sind die Schleifpartikel der ersten Art Diamantpartikel. Diamantpartikel haben sich als Schleifpartikel der ersten Art als besonders vorteilhaft erwiesen, da sie bei hohen Geschwindigkeiten eine hohe Schneideffizienz aufweisen.

Im Rahmen einer weiteren Ausführungsform sind die Schleifpartikel der zweiten Art Hartmetallpartikel, beispielsweise Wolframcarbid basierte Partikel. Hartmetallpartikel haben sich als Schleifpartikel der zweiten Art als besonders vorteilhaft erwiesen, da sie bei niedrigen Geschwindigkeiten eine hohe Schneideffizienz aufweisen.

Die Schleifpartikel können insbesondere zumindest teilweise oder vollständig in einer Matrix eingebunden sein.

Die Matrix kann insbesondere eine anorganische Matrix sein, welche beispielsweise aus einem oder mehreren Materialien ausgebildet ist, welche ausgewählt sind aus der Gruppe bestehend aus Metallen, Metall-Legierungen/- vorlegierungen (Englisch: pre-alloy)/-mischungen, anorganischen Verbindungen, und Mischungen davon.

Die Matrix kann beispielsweise aus einem oder mehreren Materialien ausgebildet sein, welche ausgewählt sind aus der Gruppe, bestehend aus metallischem Kupfer, Zinn, Eisen, Cobalt, Nickel, Titan, Chrom, Wolfram und/oder Mangan, Metalllegierungen/vorlegierungen/mischungen von Kupfer, Zinn, insbesondere Bronze, Eisen, Cobalt, Nickel, Titan, Chrom, Wolfram und/oder Mangan, anorganischen Verbindungen von Titan, Chrom, Wolfram und/oder Mangan. Zum Beispiel kann die Matrix, bezogen auf das Gesamtgewicht der Matrix, ≥ 28 Gew.-% bis ≤ 75 Gew.-%, beispielsweise ≥ 28 Gew.-% bis ≤ 72 Gew.-%, eines Matrixbestandteils umfassen, welcher ausgewählt ist aus der Gruppe, bestehend aus metallischem Kupfer, Zinn, Eisen, Cobalt und/oder Nickel, Metalllegierungen/vorlegierungen/mischungen von Kupfer, Zinn, insbesondere Bronze, Eisen, Cobalt, Nickel, Titan, Chrom, Wolfram und/oder Mangan, anorganischen Verbindungen von Titan, Chrom, Wolfram und/oder Mangan und Mischungen davon. Alternativ oder zusätzlich dazu kann die Matrix, bezogen auf das Gesamtgewicht der Matrix, ≥ 2 Gew.-% bis ≤ 20 Gew.-%, beispielsweise ≥ 2,8 Gew.-% bis ≤ 18 Gew.-%, eines Matrixbestandteils umfassen, welcher ausgewählt ist aus der Gruppe, bestehend aus anorganischen Verbindungen von Titan, Chrom, Wolfram und/oder Mangan und Mischungen davon.

Im Rahmen einer weiteren Ausführungsform umfasst das Schneidelement weiterhin Schmiermittelstrukturen. So kann vorteilhafterweise die Reibung und damit die Wärmeentwicklung reduziert werden. Dennoch entstehende Wärme kann beispielsweise durch eine Kühleinrichtung erfolgen, welche zum Beispiel auf Saugluft, gegebenenfalls in Kombination mit einem Staubfänger, Druckluft oder dem Peltier-Effekt basiert.

Im Rahmen einer weiteren Ausführungsform umfassen die Schmiermittelstrukturen ein Schmiermittel oder sind daraus ausgebildet, welches ausgewählt ist aus der Gruppe, bestehend aus anorganischen Schmiermitteln, wie Nitriden, Sulfiden, Fluoriden, Sulfaten, Oxiden, Carbiden, lodiden und/oder Boraten von Bor (h-BN), Wolfram, Molybdän, Calcium, Barium, Magnesium, Strontium, Cäsium, Natrium, Kalium, Titan, Silicium, Cer, Silber und/oder Mangan, Kohlenstoffmodifikationen, wie Graphit, Graphen und/oder Kohlenstoffnanoröhren, organischen Schmiermitteln, wie Polyhalogenolefinen, Ölen (pflanzlichen, tierischen, mineralischen und/oder synthetischen Ölen), Fetten (pflanzlichen, tierischen, mineralischen und/oder synthetischen Fetten) und/oder Wachsen (pflanzlichen, tierischen, mineralischen und/oder synthetischen Wachsen), und Mischungen davon. Zum Beispiel können die Schmiermittelstrukturen ein Schmiermittel umfassen oder daraus ausgebildet sein, welches ausgewählt ist aus der Gruppe, bestehend aus hexagonalem Bornitrid (h-BN), Kohlenstoffmodifikationen, wie Graphit, Graphen und/oder Kohlenstoffnanoröhren, Wolframsulfid (WS₂), Molybdänsulfid (MoS₂), Calciumfluorid (CaF₂), Bariumsulfid (BaF₂), Calciumsulfat (CaSO₄), Bariumsulfat (BaSO₄), Cäsiummolybdänoxidsulfid (CsMoOS₃), Titansiliciumcarbid (TiₛSiC₂), Cerfluorid (CeF₃), Silberiodid (Agl), Mangansulfid (MnS), Natriumborat (Na₂B₄O₇ 10 H₂O), Polytetrafluorethylen (PTFE, Teflon), Ölen, Fetten, Wachsen und Mischungen davon. Beispielsweise kann das Schmiermittel eine Calciumfluorid-Bariumfluorid-Mischung umfassen, welche zum Beispiel 38 Gew.-% Calciumfluorid und 62 Gew.-% Bariumfluorid, bezogen auf das Gesamtgewicht der Calciumfluorid-Bariumfluorid-Mischung, umfasst. Derartige Schmiermittel haben sich zur Reduktion der Reibung und Wärmeentwicklung als vorteilhaft erwiesen.

Die Schmiermittelstrukturen können ebenfalls zumindest teilweise oder vollständig in einer Matrix eingebunden sein.

Grundsätzlich können die Schmiermittelstrukturen in einer Vielzahl unterschiedlicher Formen ausgebildet sein. Insbesondere können die Schmiermittelstrukturen zumindest teilweise oder vollständig ausgewählt sein aus der Gruppe bestehend aus, insbesondere festen, sphärischen Schmiermittelstrukturen, stabförmigen Schmiermittelstrukturen, plättchenförmigen Schmiermittelstrukturen, gitterförmigen Schmiermittelstrukturen und/oder netzwerkförmigen Schmiermittelstrukturen und Mischungen davon.

Unter sphärischen Schmiermittelstrukturen können insbesondere Strukturen, welche in alle Raumrichtungen eine im Wesentlichen gleich große Ausdehnung aufweisen, zum Beispiel im Wesentlichen kugelförmige Strukturen, verstanden werden.

Unter stabförmigen Schmiermittelstrukturen können insbesondere Strukturen verstanden werden, welche in eine erste Raumrichtung eine größere Ausdehnung aufweisen als in die zweite und dritte Raumrichtung. Als stabförmige Schmiermittelstrukturen können neben zylindrischen Strukturen auch unregelmäßige oder symmetrische, längliche Polyeder verstanden werden.

Unter plättchenförmigen Schmiermittelstrukturen können insbesondere Strukturen verstanden werden, welche in zwei Raumrichtungen eine größere Ausdehnung aufweisen als in die dritte Raumrichtung. Die plättchenförmigen Schmiermittelstrukturen können dabei sowohl ebene, im Wesentlichen regelmäßige Körper, beispielsweise Prismen oder Quader geringer Höhe, als auch gewölbte und/oder unregelmäßige Körper, beispielsweise ähnlich einer gewölbten Folie, einer Flocke (eines Cornflakes) oder einer Schuppe, sein.

Unter gitterförmigen Schmiermittelstrukturen können sowohl regelmäßige, ebene als auch unregelmäßige und/oder gewölbte Gitter verstanden werden. Dabei können auch Gitter, die mehr als vier von einem Verknüpfungspunkt ausgehende Gitterstreben aufweisen, als Gitter verstanden werden.

Unter einer netzwerkartigen Schmiermittelstruktur kann insbesondere eine Struktur aus zwei- oder dreidimensional miteinander verbundenen Schmiermittelbereichen, ähnlich einem zwei- oder dreidimensionalen Gitter, verstanden werden.

Hinsichtlich weiterer Vorteile und Merkmale wird hiermit explizit auf die Erläuterungen im Zusammenhang mit dem erfindungsgemäßen Bohrer, Bohrsystem und Bohrverfahren sowie der Figurenbeschreibung verwiesen.

Ein weiterer Gegenstand der vorliegenden Erfindung ist ein Bohrer, welcher mindestens ein erfindungsgemäßes Schneidelement umfasst. Der Bohrer kann einen, mit einem oder mehreren erfindungsgemäßen Schneidelementen versehenen Bohrkörper und einen Schaft zur Montage an einer Bohrmaschine aufweisen.

Im Rahmen einer Ausführungsform umfasst der Bohrer eine Bohrspitze und eine Bohrkrone, wobei die Bohrspitze innerhalb der Bohrkrone auf der zum Bohren vorgesehenen Rotationsachse ausgebildet ist. Insbesondere kann dabei die Bohrspitze und/oder die Bohrkrone ein erfindungsgemäßes Schneidelement sein. Die Bohrspitze und die Bohrkrone können dabei gleichartig oder andersartig ausgestaltete erfindungsgemäße Schneidelemente sein. Alternativ dazu kann die Bohrkrone jedoch auch eine, gegebenenfalls homogen verteilte, erstes Schleifpartikelart, beispielsweise Diamantpartikel, umfassen und die Bohrspitze eine, gegebenenfalls homogen verteilte, zweite Schleifpartikelart, beispielsweise Hartmetallpartikel, umfassen, da der erfindungsgemäße Gedanke auch durch diese Ausgestaltung realisiert werden kann.

Hinsichtlich weiterer Vorteile und Merkmale wird hiermit explizit auf die Erläuterungen im Zusammenhang mit dem erfindungsgemäßen Schneidelement, Bohrsystem und Bohrverfahren sowie der Figurenbeschreibung verwiesen.

Ein weiterer Gegenstand der vorliegenden Erfindung ist ein Bohrsystem für einen erfindungsgemäßem Bohrer, welches eine Kühleinrichtung zum Kühlen des Bohrers umfasst, wobei die Kühleinrichtung dazu ausgelegt ist den Bohrer durch Saugluft, Druckluft oder mit Hilfe des Peltier-Effekts zu kühlen. Insbesondere kann das Bohrsystem einen erfindungsgemäßen Bohrer umfassen. Vorzugsweise ist die Kühleinrichtung dazu ausgelegt den Bohrer durch Saugluft zu kühlen und Staub zu sammeln.

Hinsichtlich weiterer Vorteile und Merkmale wird hiermit explizit auf die Erläuterungen im Zusammenhang mit dem erfindungsgemäßen Schneidelement, Bohrer und Bohrverfahren sowie der Figurenbeschreibung verwiesen.

Ferner betrifft die vorliegende Erfindung ein Verfahren zum Betrieb eines erfindungsgemäßen Bohrers, wobei der Bohrer durch Saugluft, Druckluft oder mit Hilfe des Peltier-Effekts gekühlt wird. Vorzugsweise wird der Bohrer durch Saugluft gekühlt, wobei Staub gesammelt wird.

Hinsichtlich weiterer Vorteile und Merkmale wird hiermit explizit auf die Erläuterungen im Zusammenhang mit dem erfindungsgemäßen Schneidelement, Bohrer und Bohrsystem sowie der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1a: eine schematische Draufsicht quer zur Rotationsachse, auf ein erstes, dem besseren Verständnis dienendes Beispiel eines mit einer Bohrspitze ausgestatteten Bohrers mit einer schrittweisen Gehaltsänderung von zwei unterschiedlichen Schleifpartikelarten;
- Fig. 1b: eine schematische Draufsicht längs der Rotationsachse, auf das in Fig. 1a gezeigte, erste, dem besseren Verständnis dienende Beispiel eines Bohrers;
- Fig. 2a: eine schematische Draufsicht quer zur Rotationsachse, auf eine erste Ausführungsform eines erfindungsgemäßen, mit einer Bohrspitze ausgestatteten Bohrers mit einer kontinuierlichen Gehaltsänderung von zwei unterschiedlichen Schleifpartikelarten;
- Fig. 2b: eine schematische Draufsicht längs der Rotationsachse, auf die in Fig. 2a gezeigte, erste Ausführungsform eines erfindungsgemäßen Bohrers;
- Fig. 3a: eine schematische Draufsicht quer zur Rotationsachse, auf ein zweites, dem besseren Verständnis dienendes Bespiel eines mit einer Bohrspitze und einer Bohrkrone ausgestatteten Bohrers mit einer schrittweisen Gehaltsänderung von zwei unterschiedlichen Schleifpartikelarten;
- Fig. 3b: eine schematische Draufsicht längs der Rotationsachse, auf das in Fig. 3a gezeigte, zweite, dem besseren Verständnis dienende Beispiel eines Bohrers;
- Fig. 4a: eine schematische Draufsicht quer zur Rotationsachse, auf ein drittes, dem besseren Verständnis dienendes Beispiel eines mit einer Bohrspitze und einer Bohrkrone ausgestatteten Bohrers mit einer schrittweisen Gehaltsänderung von zwei unterschiedlichen Schleifpartikelarten;
- Fig. 4b: eine schematische Draufsicht längs der Rotationsachse, auf das in Fig. 4a gezeigte, dritte, dem besseren Verständnis dienende Beispiel eines Bohrers;
- Fig. 5a: eine schematische Draufsicht quer zur Rotationsachse, auf eine zweite Ausführungsform eines erfindungsgemäßen, mit einer Bohrspitze und einer Bohrkrone ausgestatteten Bohrers mit einer teilweise schrittweisen und teilweise kontinuierlichen Gehaltsänderung von zwei unterschiedlichen Schleifpartikelarten;
- Fig. 5b: eine schematische Draufsicht längs der Rotationsachse, auf die in Fig. 5a gezeigte, zweite Ausführungsform eines erfindungsgemäßen Bohrers;
- Fig. 6a: eine schematische Draufsicht quer zur Rotationsachse, auf ein viertes, dem besseren Verständnis dienendes Beispiel eines mit einer Bohrkrone ausgestatteten Bohrers mit einer schrittweisen Gehaltsänderung von zwei unterschiedlichen Schleifpartikelarten;
- Fig. 6b: eine schematische Draufsicht längs der Rotationsachse, auf das in Fig. 6a gezeigte, vierte, dem besseren Verständnis dienende Beispiel eines Bohrers;
- Fig. 7a: eine schematische Draufsicht quer zur Rotationsachse, auf eine dritte Ausführungsform eines erfindungsgemäßen, mit einer Bohrkrone ausgestatteten Bohrers mit einer kontinuierlichen Gehaltsänderung von zwei unterschiedlichen Schleifpartikelarten; und
- Fig. 7b: eine schematische Draufsicht längs der Rotationsachse, auf die in Fig. 7a gezeigte, dritte Ausführungsform eines erfindungsgemäßen Bohrers.

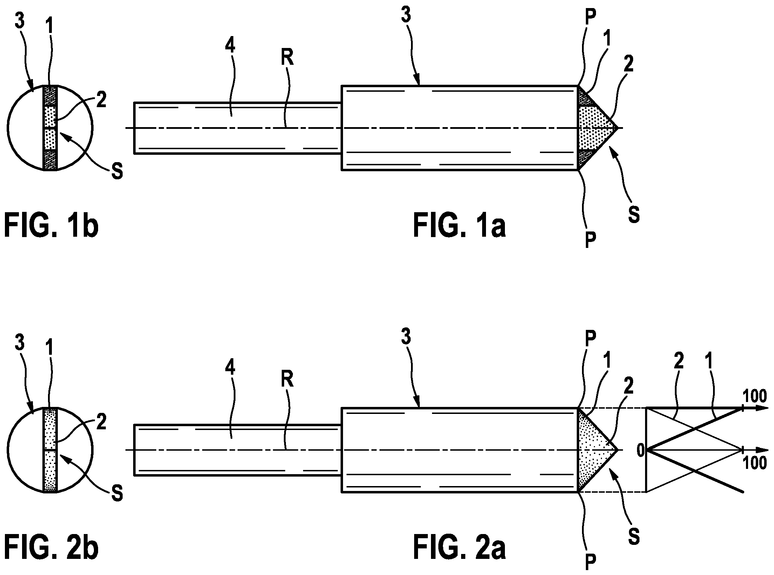

Die Figuren 1a und 1b zeigen ein erstes, dem besseren Verständnis dienendes Beispiel eines Hochgeschwindigkeitsbohrers, welcher ein als Bohrspitze S ausgebildetes Schneidelement umfasst. Mit dem Schneidelement ist der Bohrkörper 3 des Bohrers ausgestattet. Darüber hinaus umfasst der Bohrer einen Schaft 4 zur Montage an einer Bohrmaschine.

Die Figuren 1a und 1b veranschaulichen, dass das Schneidelement S dazu ausgelegt ist, sich beim Bohren um eine Rotationsachse R, insbesondere die Rotationsachse des Bohrers, zu drehen. Dabei illustrieren die Figuren 1a und 1b, dass das Schneidelement eine erste Schleifpartikelart 1 und eine zweite, von der ersten unterschiedliche Schleifpartikelart 2 umfasst. Bei der ersten Schleifpartikelart 1 handelt es sich dabei um eine Schleifpartikelart, welche bei hohen Drehzahlen, beispielsweise in einem Bereich von ≥ 5000 rpm bis ≤ 15000 rpm, eine höhere Schneideffizienz aufweist als die zweite Schleifpartikelart 2. Beispielsweise können die Schleifpartikel der ersten Art 1 Diamantpartikel und die Schleifpartikel der zweiten Art 2 Hartmetallpartikel, insbesondere Wolframcarbid basierte Partikel, sein. Mit anderen Worten, das Schneidelement umfasst im Bereich der Peripherie P beziehungsweise im äußeren Bereich im Wesentlichen die erste Schleifpartikelart 1, beispielsweise Diamantpartikel, und im Bereich der Rotationsachse R beziehungsweise im zentralen Bereich im Wesentlichen die zweite Schleifpartikelart 2, beispielsweise Wolframcarbid und/oder andere harte Carbide.

Im Rahmen des ersten Beispiels steigt der Gehalt an Schleifpartikeln der ersten Art 1 von der Rotationsachse R des Schneidelements zur Peripherie P des Schneidelementes schrittweise, insbesondere in einem Schritt von null auf einen bestimmten Wert, an. Der Gehalt an Schleifpartikeln der zweiten Art 2 sinkt dabei von der Rotationsachse R des Schneidelements zur Peripherie P des Schneidelementes schrittweise, insbesondere in einem Schritt von einem bestimmten Wert auf null.

Die Figuren 2a und 2b zeigen eine erste Ausführungsform eines erfindungsgemäßen Bohrers, welche sich von der ersten, in den Figuren 1a und 1b gezeigten Ausführungsform im Wesentlichen dadurch unterscheidet, dass der Gehalt an Schleifpartikeln der ersten Art 1 von der Rotationsachse R des Schneidelements zur Peripherie P des Schneidelementes kontinuierlich von ≥ 0 Gew.-% auf ≤ 100 Gew.-%, bezogen auf das Gesamtgewicht an Schleifpartikeln 1, 2, ansteigt, wobei der Gehalt an Schleifpartikeln der zweiten Art 2 von der Rotationsachse R des Schneidelements zur Peripherie P des Schneidelementes kontinuierlich von ≤ 100 Gew.-% auf ≥ 0 Gew.-%, bezogen auf das Gesamtgewicht an Schleifpartikeln 1, 2, sinkt.

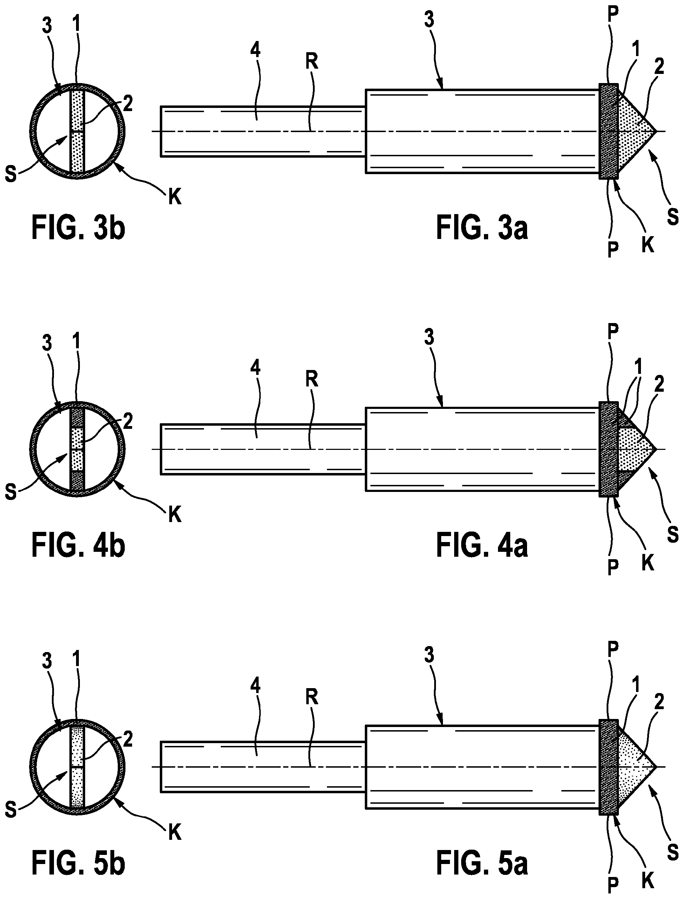

Die Figuren 3a und 3b zeigen ein zweites, dem besseren Verständnis dienendes Beispiel eines Bohrers, welche sich von dem ersten, in den Figuren 1a und 1b gezeigten Beispiel im Wesentlichen dadurch unterscheidet, dass der Bohrer zusätzlich zur Bohrspitze S eine Bohrkrone K aufweist, wobei die Bohrspitze S innerhalb der Bohrkrone K auf der zum Bohren vorgesehenen Rotationsachse R ausgebildet ist. Die Bohrkrone K kann im Rahmen der vorliegenden Erfindung sowohl als kontinuierlicher Ring als auch als segmentierter Ring (nicht dargestellt) ausgestaltet sein. Im Rahmen des zweiten Beispiels umfasst die Bohrkrone K die erste Schleifpartikelart 1 in homogener Verteilung, wobei die Bohrspitze die zweite Schleifpartikelart 2 in homogener Verteilung umfasst. In der Kombination von Bohrkrone K und Bohrspitze S steigt dabei insgesamt der Gehalt an Schleifpartikeln der ersten Art 1 von der Rotationsachse R des Schneidelements zur Peripherie P des Schneidelementes schrittweise, insbesondere in einem Schritt von null auf einen bestimmten Wert, wobei der Gehalt an Schleifpartikeln der zweiten Art 2 von der Rotationsachse R des Schneidelements zur Peripherie P des Schneidelementes schrittweise, insbesondere in einem Schritt von einem bestimmten Wert auf null, sinkt.

Die Figuren 4a und 4b zeigen ein drittes, dem besseren Verständnis dienendes Beispiel eines Bohrers, welche sich von dem zweiten, in den Figuren 3a und 3b gezeigten Beispiel im Wesentlichen dadurch unterscheidet, dass zusätzlich innerhalb der Bohrspitze S der Gehalt an Schleifpartikeln der ersten Art 1 von der Rotationsachse R des Schneidelements zur Peripherie P des Schneidelementes schrittweise, insbesondere in einem Schritt von null auf einen bestimmten Wert, steigt wobei der Gehalt an Schleifpartikeln der zweiten Art 2 von der Rotationsachse R des Schneidelements zur Peripherie P des Schneidelementes schrittweise, insbesondere in einem Schritt von einem bestimmten Wert auf null, sinkt.

Die Figuren 5a und 5b zeigen eine zweite Ausführungsform eines erfindungsgemäßen Bohrers, welche sich von dem dritten, in den Figuren 4a und 4b gezeigten Beispiel im Wesentlichen dadurch unterscheidet, dass innerhalb der Bohrspitze S der Gehalt an Schleifpartikeln der ersten 1 und zweiten 2 Art analog zu der in den Figuren 2a und 2b gezeigten, ersten Ausführungsform kontinuierlich steigt beziehungsweise sinkt.

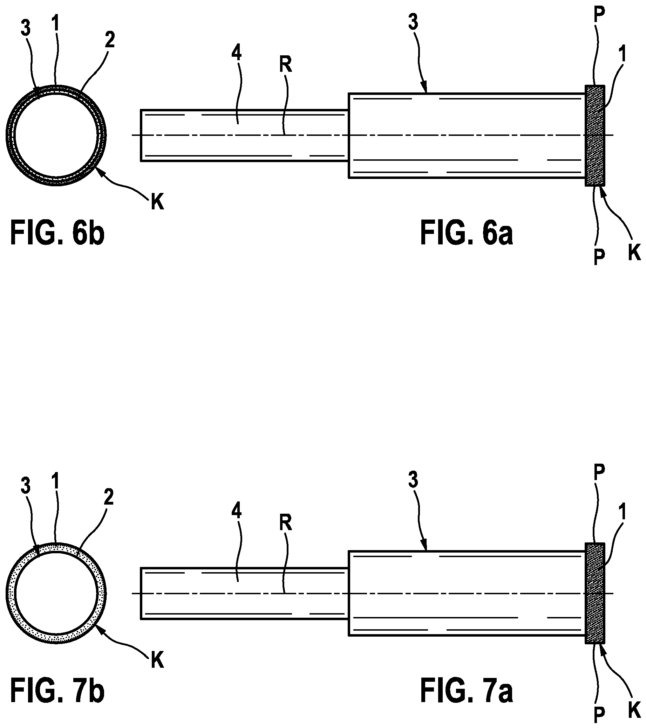

Die Figuren 6a und 6b zeigen ein viertes, dem besseren Verständnis dienendes Beispiel eines Bohrers, welche sich von dem ersten, in den Figuren 1a und 1b gezeigten Beispiel im Wesentlichen dadurch unterscheidet, dass der Bohrer anstelle einer Bohrspitze S eine Bohrkrone aufweist.

Die Figuren 7a und 7b zeigen eine dritte Ausführungsform eines erfindungsgemäßen Bohrers, welche sich von der ersten, in den Figuren 2a und 2b gezeigten Ausführungsform im Wesentlichen dadurch unterscheidet, dass der Bohrer anstelle einer Bohrspitze S eine Bohrkrone aufweist.

## Patentansprüche

1. Schneidelement für einen Bohrer,
wobei das Schneidelement dazu ausgelegt ist, sich beim Bohren um eine Rotationsachse (R) zu drehen,
wobei das Schneidelement mindestens eine erste Schleifpartikelart (1) umfasst, **dadurch gekennzeichnet dass**, der Gehalt an Schleifpartikeln der ersten Art (1) von der Rotationsachse (R) des Schneidelements zur Peripherie (P) des Schneidelementes kontinuierlich oder kontinuierlich und schrittweise steigt.

2. Schneidelement nach Anspruch 1, wobei das Schneidelement weiterhin mindestens eine zweite, von der ersten unterschiedliche Schleifpartikelart (2) umfasst.

3. Schneidelement nach Anspruch 2, wobei der Gehalt an Schleifpartikeln der zweiten Art (2) von der Rotationsachse (R) des Schneidelements zur Peripherie (P) des Schneidelementes kontinuierlich und/oder schrittweise sinkt.

4. Schneidelement nach einem der Ansprüche 1 bis 3, wobei der Gehalt an Schleifpartikeln der ersten Art (1) von der Rotationsachse (R) des Schneidelements zur Peripherie (P) des Schneidelementes von ≥ 0 Gew.-% auf ≤ 100 Gew.-%, bezogen auf das Gesamtgewicht an Schleifpartikeln (1, 2), kontinuierlich oder kontinuierlich und schrittweise steigt.

5. Schneidelement nach einem der Ansprüche 2 bis 4, wobei der Gehalt an Schleifpartikeln der zweiten Art (2) von der Rotationsachse (R) des Schneidelements zur Peripherie (P) des Schneidelementes von ≤ 100 Gew.-% auf ≥ 0 Gew.-%, bezogen auf das Gesamtgewicht an Schleifpartikeln (1, 2), kontinuierlich und/oder schrittweise sinkt.

6. Schneidelement nach einem der Ansprüche 1 bis 5, wobei
- die erste Schleifpartikelart (1) bei hohen Drehzahlen, beispielsweise in einem Bereich von ≥ 5000 rpm bis ≤ 15000 rpm, eine höhere Schneideffizienz aufweist als die zweite Schleifpartikelart (2), und/oder
- die zweite Schleifpartikelart (2) bei niedrigen Drehzahlen, beispielsweise in einem Bereich von ≥ 500 rpm bis ≤ 5000 rpm, insbesondere von ≥ 500 rpm bis ≤ 3000 rpm, eine höhere Schneideffizienz aufweist als die erste Schleifpartikelart (1).

7. Schneidelement nach einem der Ansprüche 1 bis 6, wobei die Schleifpartikel der ersten Art (1) Diamantpartikel sind.

8. Schneidelement nach einem der Ansprüche 2 bis 7, wobei die Schleifpartikel der zweiten Art (2) Hartmetallpartikel, insbesondere Wolframcarbid basierte Partikel, sind.

9. Schneidelement nach einem der Ansprüche 1 bis 8, wobei das Schneidelement weiterhin Schmiermittelstrukturen umfasst.

10. Schneidelement nach Anspruch 9, wobei die Schmiermittelstrukturen ein Schmiermittel umfassen, welches ausgewählt ist aus der Gruppe, bestehend aus anorganischen Schmiermitteln, insbesondere Nitriden, Sulfiden, Fluoriden, Sulfaten, Oxiden, Carbiden, lodiden und/oder Boraten von, Wolfram, Molybdän, Calcium, Barium, Magnesium, Strontium, Cäsium, Natrium, Kalium, Titan, Silicium, Cer, Silber und/oder Mangan, Kohlenstoffmodifikationen, wie Graphit, Graphen und/oder Kohlenstoffnanoröhren, organischen Schmiermitteln, insbesondere Polyhalogenolefinen, Ölen, Fetten und/oder Wachsen, und Mischungen davon.

11. Schneidelement nach einem der Ansprüche 1 bis 10, wobei das Schneidelement eine Bohrspitze (S) oder eine Bohrkrone (K), insbesondere eine ringförmige Bohrkrone, oder ein Bestandteil, insbesondere ein Segment, einer Bohrkrone (K) oder eine Kombination davon ist.

12. Bohrer, umfassend mindestens ein Schneidelement nach einem der Ansprüche 1 bis 11.

13. Bohrer nach Anspruch 12, wobei der Bohrer eine Bohrspitze (S) und eine Bohrkrone (K) umfasst, wobei die Bohrspitze (S) innerhalb der Bohrkrone (K) auf der zum Bohren vorgesehenen Rotationsachse (R) ausgebildet ist.

14. Bohrsystem mit einem Bohrer nach Anspruch 12 oder 13, umfassend eine Kühleinrichtung zum Kühlen des Bohrers, wobei die Kühleinrichtung dazu ausgelegt ist den Bohrer durch Saugluft oder Druckluft zu kühlen.

15. Verfahren zum Betrieb eines Bohrers nach Anspruch 12 oder 13, wobei der Bohrer durch Saugluft, Druckluft oder mit Hilfe des Peltier-Effekts gekühlt wird.

## Claims

1. Cutting element for a drill,
wherein the cutting element is designed to rotate about an axis of rotation (R) during drilling, wherein the cutting element comprises at least one type of abrasive particles (1),
**characterized in that**
the content of abrasive particles of the first type (1) increases continuously or continuously and incrementally from the axis of rotation (R) of the cutting element to the periphery (P) of the cutting element.

2. Cutting element according to Claim 1, wherein the cutting element also comprises at least one second type of abrasive particles (2) that is different from the first type.

3. Cutting element according to Claim 2, wherein the content of abrasive particles of the second type (2) decreases continuously and/or incrementally from the axis of rotation (R) of the cutting element to the periphery (P) of the cutting element.

4. Cutting element according to one of Claims 1 to 3, wherein the content of abrasive particles of the first type (1) increases continuously or continuously and incrementally from ≥0% by weight to ≤100% by weight, with respect to the total weight of abrasive particles (1, 2), from the axis of rotation (R) of the cutting element to the periphery (P) of the cutting element.

5. Cutting element according to one of Claims 2 to 4, wherein the content of abrasive particles of the second type (2) decreases continuously and/or incrementally from ≤100% by weight to ≥0% by weight, with respect to the total weight of abrasive particles (1, 2), from the axis of rotation (R) of the cutting element to the periphery (P) of the cutting element.

6. Cutting element according to one of Claims 1 to 5,
- wherein the first type of abrasive particles (1) has greater cutting efficiency than the second type of abrasive particles (2) at high speeds, for example in a range from ≥5000 rpm to ≤15 000 rpm, and/or
- the second type of abrasive particles (2) has greater cutting efficiency than the first type of abrasive particles (1) at low speeds, for example in a range from ≥500 rpm to ≤5000 rpm, in particular from ≥500 rpm to ≤3000 rpm.

7. Cutting element according to one of Claims 1 to 6, wherein the abrasive particles of the first type (1) are diamond particles.

8. Cutting element according to one of Claims 2 to 7, wherein the abrasive particles of the second type (2) are hard-metal particles, in particular tungsten-carbide-based particles.

9. Cutting element according to one of Claims 1 to 8, wherein the cutting element also comprises lubricant structures.

10. Cutting element according to Claim 9, wherein the lubricant structures comprise a lubricant which is selected from the group consisting of inorganic lubricants, in particular nitrides, sulfides, fluorides, sulphates, oxides, carbides, iodides and/or borates of tungsten, molybdenum, calcium, barium, magnesium, strontium, caesium, sodium, potassium, titanium, silicon, cerium, silver and/or manganese, carbon modifications, such as graphite, graphene and/or carbon nanotubes, organic lubricants, in particular polyhaloolefins, oils, greases and/or waxes, and mixtures thereof.

11. Cutting element according to one of Claims 1 to 10, wherein the cutting element is a drill tip (S) or a core bit (K), in particular an annular core bit, or a constituent part, in particular a segment, of a core bit (K) or a combination thereof.

12. Drill bit comprising at least one cutting element according to one of Claims 1 to 11.

13. Drill bit according to Claim 12, wherein the drill bit comprises a drill tip (S) and a core bit (K), wherein the drill tip (S) is formed within the core bit (K) on the axis of rotation (R) provided for drilling.

14. Drilling system having a drill bit according to Claim 12 or 13, comprising a cooling device for cooling the drill bit, wherein the cooling device is designed to cool the drill bit by way of suction air or compressed air.

15. Method for operating a drill bit according to Claim 12 or 13, wherein the drill bit is cooled by suction air, compressed air or with the aid of the Peltier effect.

## Revendications

1. Elément de coupe pour un foret,
l'élément de coupe étant conçu pour tourner lors du forage autour d'un axe de rotation (R), l'élément de coupe comprenant au moins un premier type de particules abrasives (1),
**caractérisé en ce que**
la teneur en particules abrasives du premier type (1) augmente en continu ou en continu et pas à pas depuis l'axe de rotation (R) de l'élément de coupe jusqu'à la périphérie (P) de l'élément de coupe.

2. Élément de coupe selon la revendication 1, l'élément de coupe présentant en outre au moins un deuxième type de particules abrasives (2) différent du premier.

3. Élément de coupe selon la revendication 2, dans lequel la teneur en particules abrasives du deuxième type (2) diminue en continu et/ou pas à pas depuis l'axe de rotation (R) de l'élément de coupe jusqu'à la périphérie (P) de l'élément de coupe.

4. Élément de coupe selon l'une quelconque des revendications 1 à 3, dans lequel la teneur en particules abrasives du premier type (1) augmente en continu ou en continu et pas à pas depuis l'axe de rotation (R) de l'élément de coupe jusqu'à la périphérie (P) de l'élément de coupe de ≥ 0 % en poids à ≤ 100 % en poids, par rapport au poids total des particules abrasives (1, 2).

5. Élément de coupe selon l'une quelconque des revendications 2 à 4, dans lequel la teneur en particules abrasives du deuxième type (2) diminue en continu et/ou pas à pas depuis l'axe de rotation (R) de l'élément de coupe jusqu'à la périphérie (P) de l'élément de coupe de ≤ 100 % en poids à ≥ 0 % en poids, par rapport au poids total des particules abrasives (1, 2).

6. Élément de coupe selon l'une quelconque des revendications 1 à 5, dans lequel
- le premier type de particules abrasives (1) présente une efficacité de coupe supérieure au deuxième type de particules abrasives (2) à des vitesses de rotation supérieures, par exemple dans une plage de ≥ 5 000 tr/m à ≤ 15 000 tr/m, et/ou
- le deuxième type de particules abrasives (2) présente une efficacité de coupe supérieure au premier type de particules abrasives (1) à des vitesses de rotation inférieures, par exemple dans une plage de ≥ 500 tr/m à ≤ 5 000 tr/m, en particulier de ≥ 500 tr/m à ≤ 3000 tr/m.

7. Élément de coupe selon l'une quelconque des revendications 1 à 6, dans lequel les particules abrasives du premier type (1) sont des particules de diamant.

8. Élément de coupe selon l'une quelconque des revendications 2 à 7, dans lequel les particules abrasives du deuxième type (2) sont des particules de métal dur, en particulier des particules à base de carbure de tungstène.

9. Élément de coupe selon l'une quelconque des revendications 1 à 8, dans lequel l'élément de coupe comprend en outre des structures de lubrifiant.

10. Élément de coupe selon la revendication 9, dans lequel les structures de lubrifiant comprennent un lubrifiant qui est choisi parmi le groupe constitué des lubrifiants inorganiques, en particulier des nitrures, des sulfures, des fluorures, des sulfates, des oxydes, des carbures, des iodures et/ou des borates de tungstène, de molybdène, de calcium, de baryum, de magnésium, de strontium, de césium, de sodium, de potassium, de titane, de silicium, de cérium, d'argent et/ou de manganèse, des modifications du carbone, telles que le graphite, le graphène et/ou des nanotubes de carbone, des lubrifiants organiques, en particulier des oléfines polyhalogénées, des huiles, des graisses et/ou des cires, et des mélanges de ceux-ci.

11. Élément de coupe selon l'une quelconque des revendications 1 à 10, dans lequel l'élément de coupe est une mèche de forage (S) ou une couronne de forage (K), en particulier une couronne de forage annulaire, ou un constituant, en particulier un segment, d'une couronne de forage (K) ou une combinaison de ceux-ci.

12. Foret, comprenant au moins un élément de coupe selon l'une quelconque des revendications 1 à 11.

13. Foret selon la revendication 12, dans lequel le foret comprend une pointe de forage (S) et une couronne de forage (K), la pointe de forage (S) étant réalisée à l'intérieur de la couronne de forage (K) sur l'axe de rotation (R) prévu pour le forage.

14. Système de forage comprenant un foret selon la revendication 12 ou 13, comprenant un dispositif de refroidissement pour refroidir le foret, le dispositif de refroidissement étant conçu pour refroidir le foret par de l'air d'aspiration ou par de l'air comprimé.

15. Procédé pour faire fonctionner un foret selon la revendication 12 ou 13, dans lequel le foret est refroidi par de l'air d'aspiration, par de l'air comprimé, ou à l'aide de l'effet Peltier.
